# EUROPEAN PATENT APPLICATION

(11) **EP 4 414 077 A1**
(43) Date of publication of application: **14.08.2024**
(21) Application number: 23155470.0
(22) Date of filing: 07.02.2023
(51) Int. Cl.: B01L 9/06, G01N 35/00

(54) **REAGENT SUPPLY APPARATUS AND REAGENT VIAL RACK THEREFOR**

(71) Applicant: Lunaphore Technologies SA, 1131 Tolochenaz (CH)
(72) Inventor: SCHROEDER, Tyler, Columbia, 21046 (US); SPRINGER, Melanie, Baltimore, 21230 (US); MULLER, Sébastien, 1110 Morges (CH)
(74) Representative: reuteler & cie SA

(57) **Abstract**

A reagent vial rack (4) for removably coupling reagent vials (7) to a reagent supply apparatus (3), the reagent supply apparatus comprising a liquid pumping system and a coupling device engageable with the reagent vial rack for lifting the reagent vials (7) mounted on the reagent vial rack into sealing engagement with sealing interfaces (9) of the liquid pumping system, the reagent vial rack including
- a support device (6) comprising a coupling mechanism (12) configured for removable coupling of the reagent vial rack to the reagent supply apparatus, and
- a plurality of reagent tube holders (8), each configured for holding one said reagent vial,
- each reagent tube holder comprising a manually actuated spring biased locking and release mechanism configured for individual mounting and removal of the reagent tube holder to the support device (6).

## Description

The present invention relates to a reagent supply apparatus for a sampling system, in particular for sampling biological material. The invention relates in particular to a reagent vial rack of the reagent supply apparatus.

Apparatuses for performing analysis of biological material such as tissue samples comprise a microfluidic system delivering various reagents to the biological sample to detect various markers that are representative of the properties of the biological sample under analysis. Certain apparatuses require a plurality of reagents, for instance for performing multiplexing analysis on a biological sample with different markers. Many markers may include antibodies that attach to antigens on the biological sample, the reagents including antibodies being provided in small reagent tubes that are commonly known as "centrifuge tubes" that may have container capacities typically varying from 1,5 ml to 10 ml. The reagent tubes and are often made of a polymer such as polypropylene and comprise a container portion and a cap pivotally connected to the container portion.

These reagent tubes are mounted typically on a rack which is removably fixed to a reagent supply apparatus having a liquid pumping system and liquid draw pipes that insert in the reagent tubes for extracting the reagents contained therein as and when needed. In conventional devices, the installation and removal of reagent tubes requires removal of the rack from the apparatus. If different reagents are required for any specific analysis to be performed, or if during an analysis reagent tubes should be replaced or refilled, then the entire rack must be removed from the apparatus.

In view of the foregoing, it is an object of this invention to provide a reagent supply apparatus for a biological sampling system that is economical and allows easy flexible installation of reagent tubes.

It is advantageous to provide a reagent tube rack that is compact and robust.

It is advantageous to provide a reagent tube rack for a reagent supply apparatus that is easy to use and requires little time for installation, removal, and replacement of reagent tubes.

It is advantageous to provide a reagent tube rack for a reagent supply apparatus that ensures excellent coupling with a liquid pumping system of the reagent supply apparatus.

Objects of this invention have been achieved by providing a system according to claim 1. Dependent claims set forth various advantageous features of embodiments of the invention.

Disclosed herein is a reagent vial rack for removably coupling reagent vials to a reagent supply apparatus, the reagent supply apparatus comprising a liquid pumping system and a coupling device engageable with the reagent vial rack for lifting the reagent vials mounted on the reagent vial rack into sealing engagement with sealing interfaces of the liquid pumping system, the reagent vial rack including
- a support device comprising a coupling mechanism configured for removable coupling of the reagent vial rack to the reagent supply apparatus, and
- a plurality of reagent tube holders, each configured for holding one said reagent vial,
- each reagent tube holder comprising a manually actuated spring biased locking and release mechanism configured for individual mounting and removal of the reagent tube holder to the support device.

In an advantageous embodiment, said reagent tube holder comprises
- a base part,
- a vial lodging part comprising a vial receiving hole, movably mounted to the base part, and
- a return spring biasing the vial lodging part relative to the base part towards a locked position, the vial lodging part being movable relative to the base part against the force of the return spring to an unlocked position.

In an advantageous embodiment, said vial lodging part has an upper edge around said vial receiving hole defining a tube rim seat configured for engaging a rim of the reagent vial, the vial lodging part further comprising a locking shoulder engageable with a complementary locking shoulder on the holder support base of the support device when in the locked position and disengageable when the vial lodging part is displaced to the unlocked position with respect to the base part.

In an advantageous embodiment, the locking shoulder on the vial lodging part is provided on a projection comprising a cam face configured for engagement with an edge of the complementary locking shoulder on the holder support base.

In an advantageous embodiment, the vial lodging part comprises a locating recess or projection engageable with a complementary locating projection or recess provided on the holder support base configured to allow pivoting of the reagent tube holder relative to the holder support base from an unlocked position into a locked position and vice-versa.

In an advantageous embodiment, the base part comprises a locating shoulder configured to press against a complementary locating shoulder on the holder support base during coupling of the reagent tube holder to the support device.

In an advantageous embodiment, the coupling mechanism configured for removable coupling of the reagent vial rack to the reagent supply apparatus comprises a spring biased movable catch configured to engage a lift hook of the coupling device of the reagent supply apparatus.

In an advantageous embodiment, the movable catch comprises a hook guide channel comprising at least one tapered rail configured for engaging a leading edge of the lift hook, the movable catch further comprising a release button portion manually engageable by an operator for moving the movable catch from a locked to an unlocked position against the spring bias for uncoupling the reagent vial rack from the reagent supply apparatus.

In an advantageous embodiment, the reagent vial rack further comprises a catch blocking mechanism on which the movable catch is slidably mounted, the catch blocking mechanism comprising:
- a cam slide having a lift hook engagement edge extending in a blocking position into an upper portion of a hook guide channel configured to engage the lift hook during insertion into the hook guide channel, the catch blocking mechanism, and
- a movable blocking element comprising a blocking finger engaging a complementary blocking shoulder on the movable catch in a blocked position and disengaging the complementary blocking shoulder in an unlocked position

In an advantageous embodiment, the cam slide comprises a cam extension engaging a cam portion on the movable blocking element configured to move the movable blocking element from the blocked to the unblocked position.

In an advantageous embodiment, the support device comprises a pair of coupling mechanisms for coupling to the reagent supply apparatus, each coupling mechanism mounted on a lateral end of the holder support base.

In an advantageous embodiment, the plurality of reagent tube holders mountable to the support device is at least four.

Also disclosed herein is a reagent supply apparatus comprising a plurality of reagent vial racks according to any of the above embodiments, a liquid pumping system, and a plurality of coupling devices engageable with corresponding plurality of reagent vial racks for lifting the reagent vials mounted on the reagent vial racks into sealing engagement with sealing interfaces of the liquid pumping system.

In an advantageous embodiment, the coupling devices comprise lift hooks.

Also disclosed herein is a biological matter sampling system comprising a reagent supply apparatus according to the above embodiments.

Further objects and advantageous features of the invention will be apparent from the claims, from the detailed description, and annexed drawings, in which:

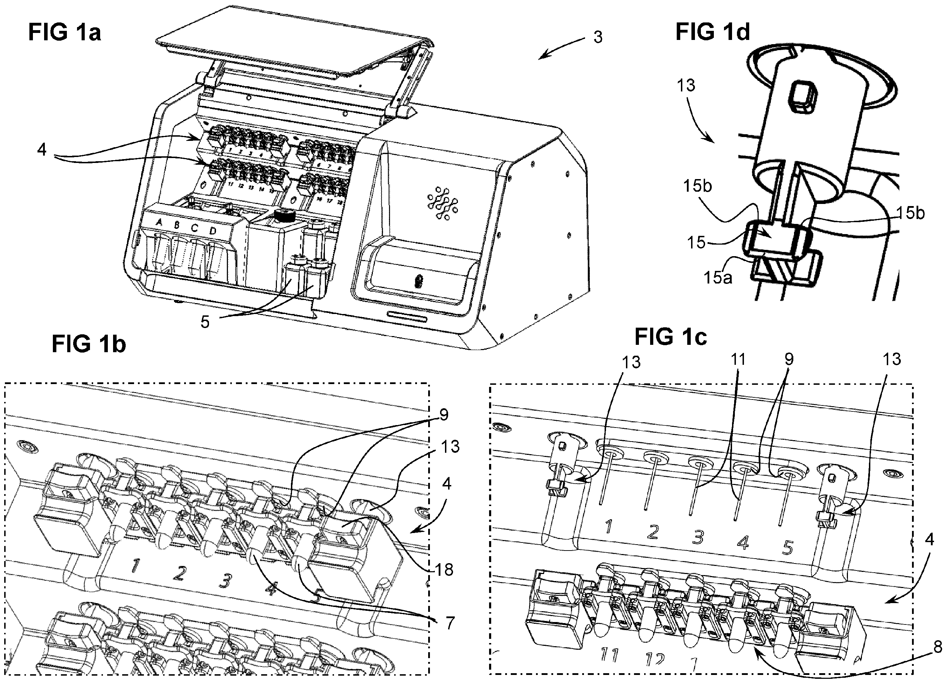

Figure 1a is a perspective view of a reagent supply apparatus for a biological material sampling system according to an embodiment of the invention;
Figure 1b is a detailed view of a portion of the reagent supply apparatus of figure 1a showing a reagent vial rack coupled to the reagent supply apparatus;
Figure 1c is a view similar to figure 1b with the reagent vial rack removed;
Figure 1d is a close-up perspective view of a lift hook of a reagent supply apparatus;

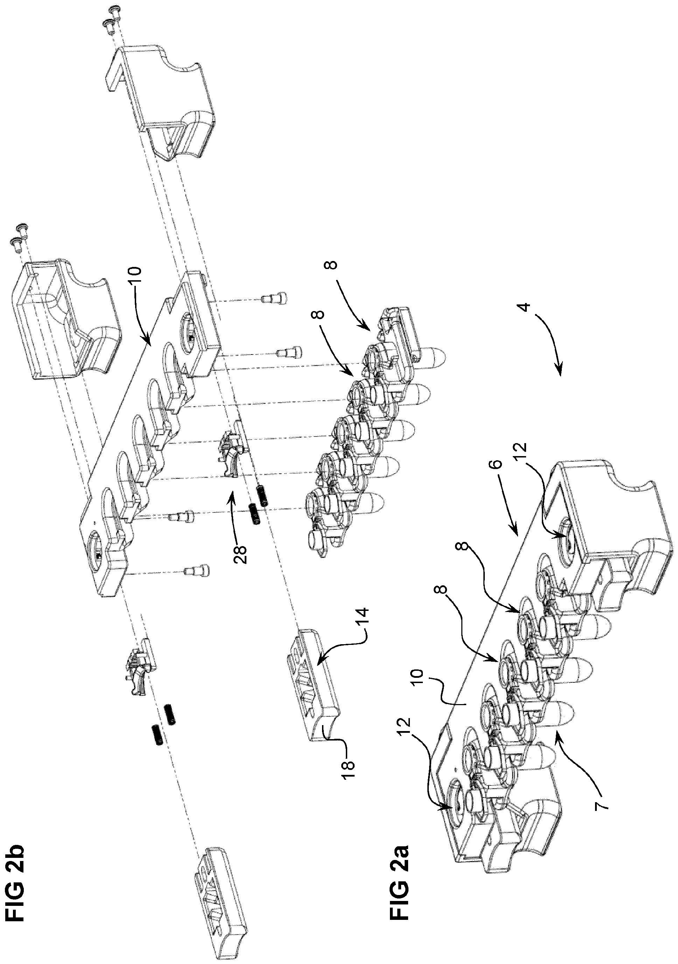

Figure 2a is a perspective view of a reagent vial rack of a reagent supply apparatus, according to an embodiment of the invention;
Figure 2b is a perspective exploded view of the reagent vial rack of figure 2a;

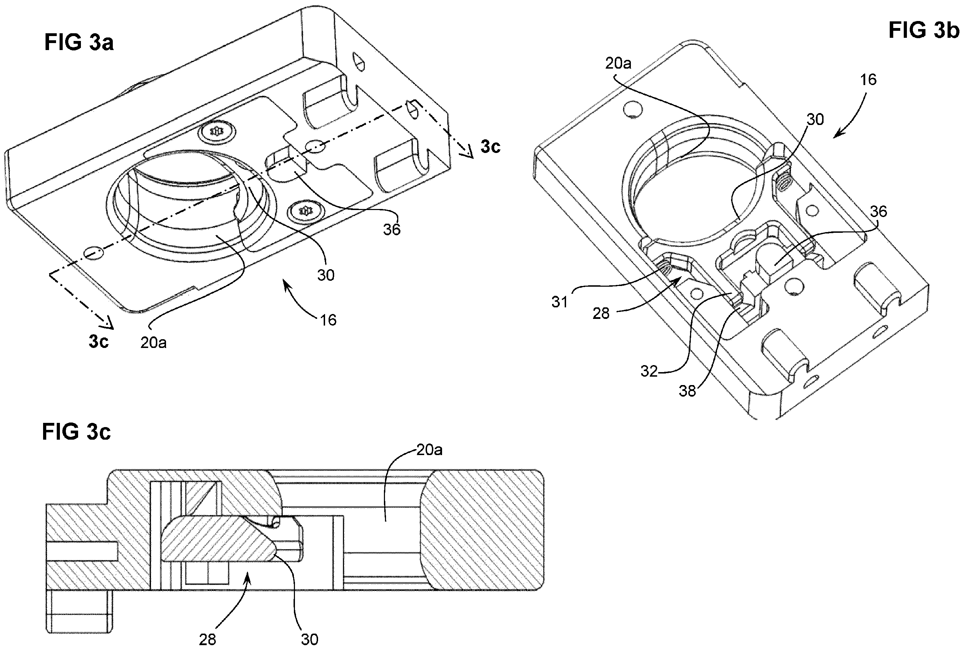

Figure 3a is a perspective view of a portion of a coupling mechanism of a support device of the reagent vial rack according to an embodiment of the invention;
Figure 3b is a perspective view of the device of figure 3a with a portion of a top wall removed to see an inner catch blocking mechanism;
Figure 3c is a cross-sectional view through lines 3c-3c of figure 3a;

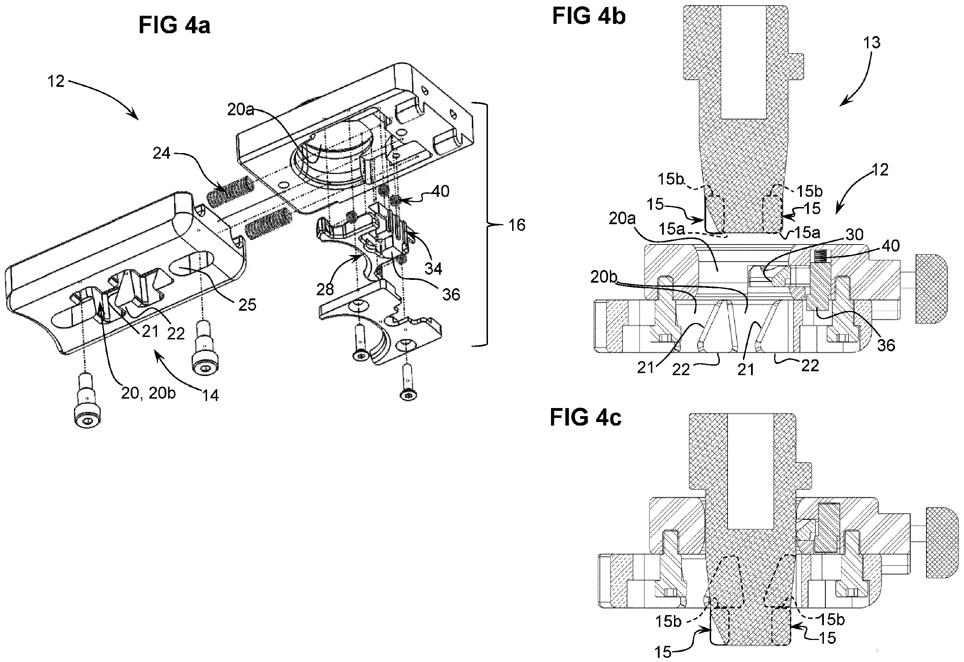

Figure 4a is a perspective exploded view of a coupling mechanism, including the portions of figure 3a, according to an embodiment of the invention;
Figure 4b is a cross-sectional view through the assembled device of figure 4a being engaged by a lift hook of a coupling device of the reagent supply apparatus;
Figure 4c is a view similar to figure 4b showing the lift hook and rack fully coupled together;
Figures 5a and 5b are perspective views of a reagent tube holder removably mountable to the support device of the reagent vial rack according to an embodiment of the invention;
Figure 5c is an exploded perspective view of the device and reagent tube of figure 5a;
Figure 5d is a cross-sectional view of the assembly of figure 5a;
Figure 6 is a schematic illustration in side view and in perspective showing steps in the coupling of the reagent tube holder to the support device according to an embodiment of the invention.

Referring to the figures, a reagent supply apparatus for a biological matter sampling system comprises a liquid pumping system (not shown) that is configured to draw liquids from reagent bottles 5 coupled to the reagent supply apparatus, and from a plurality of reagent tubes 7 also coupled to the reagent supply apparatus. The reagent supply apparatus may have a biological matter sampling unit integrated therein, for instance including a microfluidic chip through which reagents are injected, or may be configured for connection to an external device (not shown) holding the biological sample and microfluidic device for the sample analysis. The liquid pumping system of the reagent supply apparatus is configured to draw liquids from each of the reagent tubes 7 and reagent bottles 5 individually according to the needs of the sampling process. As such, the liquid pumping system and control of the reagent supply apparatus is *per se* known and does not need to be further described herein.

During operation, the reagent vials are coupled to the liquid pumping system via a sealing interface 9 such that positive or negative pressures (relative to atmospheric pressure) may be exerted within the reagent tube. The positive pressure may for instance be used for pumping reagents out of the reagent tube via the liquid draw pipes 11 that are inserted into the reagent tubes and that extend to close to a bottom of the reagent tube when the rack is fully coupled to the apparatus.

Typical reagent tubes 7, which for instance may be of the widely used Eppendorf (TM) type, comprise a container portion 7b connected via a flexible, pivotable hinge to a cap 7a, the container portion 7b comprising a rim 7c.

According to an aspect of the invention, a reagent vial rack 4 is configured to receive, hold and position a plurality of reagent tubes 7 and to sealingly hold and engage the each reagent tube against the respective sealing interfaces 9 of the liquid pumping system of the reagent supply apparatus 3.

The reagent vial rack 4 comprises a support device 6 and a plurality of reagent tube holders 8 removably mountable to the support device. The support device comprises a holder support base 10 and at least one coupling mechanism 12 cooperating with a coupling device of the reagent supply apparatus 3 for removably locking the reagent vial rack to the reagent supply apparatus.

Each reagent tube holder 8 comprises a vial lodging part 42 movably mounted with respect to a base part 56 for lodging and holding a reagent vial 7, each reagent tube holder 8 removably couplable to the holder support base 10 of the support device 6.

The coupling mechanism 12 of the reagent vial rack 4 comprises a movable catch 14 mounted on a base assembly 16, that comprises a hook guide channel 20 having a tapered rail 21 and a locking shoulder 22 for receiving and engaging lift hooks 13 of the coupling device of the reagent supply apparatus 3. The lift hook 13 comprises a locking portion 15 having a leading edge 15a that is configured to engage the tapered rail 21 when the lift hook 13 is inserted in the hook guide channel 20 to slide the movable catch 14 against the force of a return spring 24. The movable catch slides until the locking shoulder 15b of the locking portion 15 of the lift hooks 13 pass the locking shoulders 22 at the end of the hook guide channel 20, such that the return spring 24 shifts the movable catch back and the locking shoulders 15b, 22 engage, thereby locking the holder support base 10 to the lift hooks 13.

The lift hooks may then be raised by a motorized mechanism (not shown) in the reagent supply apparatus 3 to press the rims 7c of the reagent vials 7 against the respective sealing interfaces 9 for operation of the reagent supply apparatus.

The movable catch 14 comprises a release button portion 18 that is accessible by an operator to depress the movable catches 14 against the biasing force of the return spring 24 to disengage the reagent vial rack 4 from the lift hooks 13. The latter of course may only be released when the lift hooks 13 are lowered and the reagent vials 7 disconnected from the sealing interfaces 9. Pressing the release button portion 18 of the movable catch 14 against the return spring force 24 allows the movable catch to be translated such that the locking shoulder 15b of the lift hooks 13 disengage from the locking shoulder 22 of the movable catch and the holder support base 10 can then be lowered with the lift hooks 13 passing through the lower hook guide channel 20b.

The movable catch 14 may be movably coupled to a base assembly which in a preferred embodiment includes a catch blocking mechanism 16. The catch blocking mechanism 16 prevents the movable catch 14 from being movably actuated by an operator unless the lift hooks 13 have been partially engaged in the hook guide channels 20, but prior to the leading edges 15a movably engaging the complementary tapered rails 21 of the hook guide channel 20.

The catch blocking mechanism 16 comprises a cam slide 28 presenting a lift hook engagement edge 30 configured to be engaged by the lift hook 13 as it enters the upper portion 20b of the hook guide channel 20, the movable cam slide 28 being biased by a return spring 31 and comprising at least one cam extension 32 configured to engage a cam portion 38 of the movable blocking element 34. The movable blocking element 34 comprises a blocking finger 36 that, in its blocking position, engages a blocking shoulder 25 on the movable catch to prevent the movable catch from being translated. The blocking finger 36, when depressed in a disengaged position by the cam slide 28, disengages the blocking shoulder 25 on the movable catch 14 to allow it to be actuated into the lift hook release position.

The movable blocking element 34 is biased towards its blocking position by a counter-cam spring 40.

The movable blocking element 34 comprises a cam portion 38 configured to be engaged by the cam extensions 32 on the cam slide 28. As the lift hooks 13 enter the upper portion 20a of the hook guide channel 20 formed through the catch blocking mechanism 16, the cam slide 28 edge 30c is engaged by the lift hooks and displaces out of the hook guide channel 20a such that the cam extensions 32 engage the cam portions 38 of the movable blocking element 34 which is thus caused to move from the blocking position to the unblocking position against the force of the counter-cam springs 40.

Thus, when the lift hooks are engaged past the upper portion 20a of the hook guide channel 20, the movable catch 14 is unblocked and may be further translated by engagement of the lift hooks 13 with the tapered rails 21 in the hook guide channel 20 of the movable catch 14. Incorrect partial mounting of the support device to the reagent supply apparatus is thus avoided by false operation of a user pressing on the release button portions 18 of the movable catch during installation of the reagent vial rack 4 to the reagent supply apparatus 3.

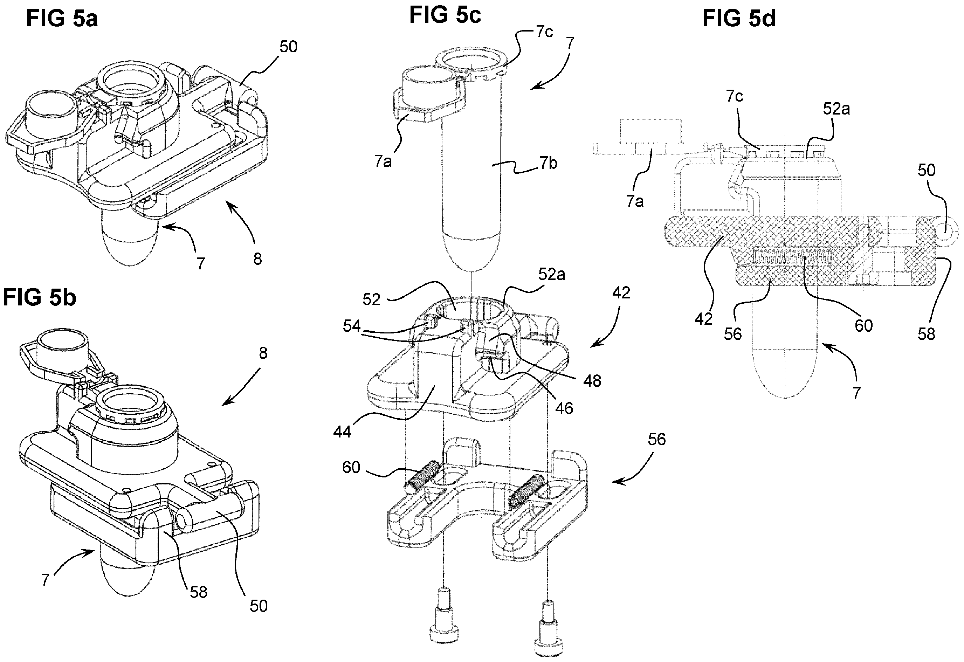

Referring now to figures 5a to 6, the reagent tube holders 8 will now be further described. Reagent tube holder 8 according to embodiments of the invention comprises a vial lodging part 42 movably mounted with respect to a base part 56, the vial lodging part 42 comprises a vial receiving hole 52 having an upper edge 52a that comprises a tube rim seat engaging the rim 7c of the reagent vials 7, and may further comprise (optionally) a tube cap grip 54 for holding the cap 7a of the reagent vials in an open position as illustrated.

The vial lodging part further comprises a locating recess or locating projection 50 configured to engage in a complementary locating projection or locating recess 51 in the holder support base 10 of the support device 6 and on another end a button portion 44 that is engageable by an operator for shifting the vial lodging part 42 relative to the base part 56. A return spring 60 is mounted between the tube receptacle 42 and the base part 56 such that when the button portion 44 is pressed the return spring 60 is biased, and when the button portion is released the tube receptacle 42 slides back to its initial position relative to the base part 56.

The base part 56 comprises a locating shoulder 58 that is configured to engage a corresponding locating surface 59 on the holder support base 10 when the reagent tube holder 8 is mounted to the support device 6.

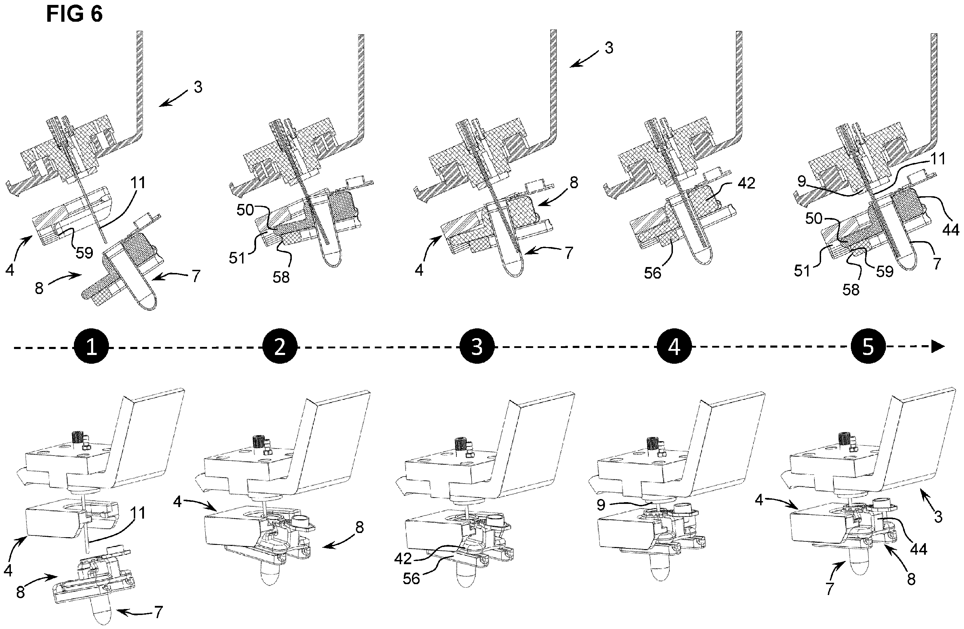

The vial lodging part 42 further comprises a locking shoulder 46 that engages a corresponding locking shoulder on the holder support base 10 when the reagent tube holder 8 is coupled to the support device 6. The locking shoulder 46 may be formed below a cam face 48 configured to engage the edge of the complementary locking shoulder on the holder support base 10. As best seen in figures 6, when the vial lodging part 42 is lifted up against and towards the holder support base 10, the engagement of the cam face 48 with the complementary locking shoulder on the holder support base causes the vial lodging part to move with respect to the base part 56 against the force of the return spring 60. The reagent tube holder is lifted towards the support device 6 while the operator ensures that the liquid draw pipe 11 of the liquid pumping system is inserted into the reagent vial 7. The operator tilts the reagent tube holder such that the operator can insert the locating projection 50 into the corresponding locating receptacle in the holder support base 10 (step 2 of figure 6). The reagent tube holder 8 may then be pivoted upwardly which shifts the vial lodging part 42 into the locked position under the force of the return spring 60 relative to the base part 56 In the locked position, the locking shoulder 46 engages the complementary locking shoulder on the holder support base 10. It may be noted that for coupling of the reagent tube holder 8 into a locking position with the holder support base 10 of the support device 6, the user does not need to press the button portion 44 if the reagent tube holder 8 is provided with a cam face 48 on the locking projection comprising the locking shoulder 46, as in the illustrated embodiment. For release of the reagent tube holder 8, the operator may press on the button portion 44 and pivotally lower the reagent tube holder to disengage the reagent tube holder in a reverse operation to the mounting process described above.

Advantageously, individual reagent tubes may be removed from the reagent vial rack 4 in a rapid and easy manner for replacement, exchange, or refilling of a reagent tube to be mounted on the support device while the support device remains coupled to the reagent supply apparatus 3. Also, exchange in the position of different reagent vials can be easily operated in order to, for instance, change the order of delivery of reagents in a very convenient manner. The reagent vial rack 4 may also be easily and conveniently removed from the reagent supply apparatus with or without the reagent tube holders and reagent vial mounted thereon.

The reagent tube holder 8 coupled to the support device 6 with the coupling mechanism 12 also ensures that the reagent vials may be accurately and repeatedly positioned with respect to the corresponding sealing interfaces of the reagent supply apparatus to ensure good sealing therebetween yet coupling and uncoupling and removal.

### List of references used

### Sampling system

Reagent supply apparatus 3
   Reagent bottles 5
   Reagents
   Reagent vials (Reagent tubes / Centrifuge tubes) 7
      Cap 7a
      Container portion 7b
         Rim 7c
   Liquid pumping system
      Sealing interface 9
      Liquid draw pipes 11
   Coupling device
      Lift hooks 13
         Locking portion 15
            Leading edge 15a
            Locking shoulder 15b
Reagent vial rack 4
   Support device 6
      Holder support base 10
         locating recess 51
         locating surface 59
      Coupling mechanism 12
         Movable catch 14
            Release button portion 18
            Hook guide channel 20
               Lower guide channel portion 20b
               Tapered rail 21
            locking shoulder 22
            return spring 24
            fixing elements (screws)
         base assembly (catch blocking mechanism) 16
            *Hook guide channel 20*

               Upper guide channel portion 20a
            cam slide 28
               lift hook engagement edge 30
               cam extension 32
            movable blocking element 34
               blocking finger 36
               cam portion 38
               counter-cam spring 40
**(individual) reagent tube holder 8**
   Vial lodging part 42
      Button portion 44
      Locking shoulder 46
      Cam face 48
      Locating projection 50
      Vial receiving hole 52
         Upper edge (tube rim seat) 52a
   Tube cap grip 54
   Base part 56
      Locating shoulder 58
      Return spring 60

## Claims

1. A reagent vial rack (4) for removably coupling reagent vials (7) to a reagent supply apparatus (3), the reagent supply apparatus comprising a liquid pumping system and a coupling device engageable with the reagent vial rack for lifting the reagent vials (7) mounted on the reagent vial rack into sealing engagement with sealing interfaces (9) of the liquid pumping system, the reagent vial rack including
- a support device (6) comprising a coupling mechanism (12) configured for removable coupling of the reagent vial rack to the reagent supply apparatus, and
- a plurality of reagent tube holders (8), each configured for holding one said reagent vial,
- each reagent tube holder comprising a manually actuated spring biased locking and release mechanism configured for individual mounting and removal of the reagent tube holder to the support device (6).

2. The reagent vial rack according to the preceding claim wherein said reagent tube holder comprises
- a base part (56),
- a vial lodging part (42) comprising a vial receiving hole (52), movably mounted to the base part (56), and
- a return spring (60) biasing the vial lodging part relative to the base part towards a locked position, the vial lodging part being movable relative to the base part against the force of the return spring to an unlocked position.

3. The reagent vial rack according to the preceding claim wherein said vial lodging part (42) has an upper edge around said vial receiving hole (52) defining a tube rim seat (52) configured for engaging a rim (7c) of the reagent vial (7), the vial lodging part further comprising a locking shoulder (46) engageable with a complementary locking shoulder on the holder support base of the support device (6) when in the locked position and disengageable when the vial lodging part (42) is displaced to the unlocked position with respect to the base part (56).

4. The reagent vial rack according to any preceding claim wherein the locking shoulder (46) on the vial lodging part is provided on a projection comprising a cam face (48) configured for engagement with an edge of the complementary locking shoulder on the holder support base (10).

5. The reagent vial rack according to any preceding claim wherein the vial lodging part (42) comprises a locating recess or projection (50) engageable with a complementary locating projection or recess provided on the holder support base (10) configured to allow pivoting of the reagent tube holder relative to the holder support base from an unlocked position into a locked position and vice-versa.

6. The reagent vial rack according to any preceding claim wherein the base part comprises a locating shoulder (58) configured to press against a complementary locating shoulder on the holder support base (10) during coupling of the reagent tube holder to the support device.

7. The reagent vial rack according to any preceding claim wherein the coupling mechanism (12) configured for removable coupling of the reagent vial rack to the reagent supply apparatus comprises a spring biased movable catch (14) configured to engage a lift hook (13) of the coupling device of the reagent supply apparatus.

8. The reagent vial rack according to the preceding claim wherein the movable catch (14) comprises a hook guide channel (20) comprising at least one tapered rail (20a) configured for engaging a leading edge (15a) of the lift hook (13), the movable catch further comprising a release button portion (18) manually engageable by an operator for moving the movable catch (14) from a locked to an unlocked position against the spring bias for uncoupling the reagent vial rack from the reagent supply apparatus.

9. The reagent vial rack according to either of the two directly preceding claims further comprising a catch blocking mechanism (16) on which the movable catch (14) is slidably mounted, the catch blocking mechanism (16) comprising:
- a cam slide (28) having a lift hook engagement edge (30) extending in a blocking position into an upper portion of a hook guide channel (20) configured to engage the lift hook (13) during insertion into the hook guide channel, the catch blocking mechanism (16), and
- a movable blocking element (34) comprising a blocking finger (36) engaging a complementary blocking shoulder (25) on the movable catch in a blocked position and disengaging the complementary blocking shoulder in an unlocked position

10. The reagent vial rack according to the preceding claim wherein the cam slide (28) comprises a cam extension (32) engaging a cam portion (38) on the movable blocking element (34) configured to move the movable blocking element (34) from the blocked to the unblocked position.

11. The reagent vial rack according to any preceding claim wherein the support device comprises a pair of coupling mechanisms (12) for coupling to the reagent supply apparatus, each coupling mechanism (12) mounted on a lateral end of the holder support base (10).

12. The reagent vial rack according to any preceding claim wherein the plurality of reagent tube holders (8) mountable to the support device (6) is at least four.

13. A reagent supply apparatus (3) comprising a plurality of reagent vial racks (4) according to any preceding claim, a liquid pumping system, and a plurality of coupling devices engageable with corresponding plurality of reagent vial racks for lifting the reagent vials (7) mounted on the reagent vial racks into sealing engagement with sealing interfaces (9) of the liquid pumping system.

14. The reagent supply apparatus according to the preceding claim wherein the coupling devices comprise lift hooks (13).

15. A biological matter sampling system comprising a reagent supply apparatus according to either of the two directly preceding claims.
